# EUROPEAN PATENT APPLICATION

(11) **EP 4 760 467 A1**
(43) Date of publication of application: **17.06.2026**
(21) Application number: 24851001.8
(22) Date of filing: 06.08.2024
(51) Int. Cl.: G06F 3/0481

(54) **MEDIA CONTENT PROCESSING METHOD AND DEVICE, MEDIA CONTENT DISPLAY METHOD AND DEVICE, STORGE MEDIUM, AND PROGRAM PRODUCT**

(30) Priority: 07.08.2023 CN 202310988058
(71) Applicant: Beijing Zitiao Network Technology Co., Ltd., Beijing 100190 (CN)
(72) Inventor: SONG, Xin, Beijing 100028 (CN); ZOU, Rong, Beijing 100028 (CN)
(74) Representative: Marks & Clerk LLP
(86) International application number: PCT/CN2024/110096
(87) International publication number: WO 2025/031356

(57) **Abstract**

Embodiments of the present disclosure provide a media content processing method, an electronic device, and a computer-readable storage medium. The method includes: displaying media content to be posted on an editing page of media content, where the media content to be posted is obtained based on a media content generation page; displaying an entry control of a background music panel of the media content to be posted on the editing page of the media content; displaying the background music panel on the editing page in response to a triggering operation on the entry control, where the background music panel includes at least one background music item; and displaying, in response to a triggering operation on a first target background music item among the at least one background music item, a first music sticker corresponding to the first target background music item on the editing page.

## Description

The present application claims priority to Chinese Patent Application No. 202310988058.0, filed on August 07, 2023, which is incorporated herein by reference in its entirety as a part of the present application.

### TECHNICAL FIELD

Embodiments of the present disclosure relate to the field of multimedia technologies, and in particular, to a media content processing method, a media content display method, a media content processing device, a media content display device, a storage medium, and a program product.

### BACKGROUND

Music in multimedia works on the Internet is a key factor in highlighting the quality of the works.

In the related art, the forms of background music available to users for their works are relatively monotonous, and the interactivity is poor.

### SUMMARY

Embodiments of the present disclosure provide a media content processing method, a media content display method, a media content processing device, a media content display device, a storage medium, and a program product, so as to simplify operations and improve the efficiency of work creation.

According to a first aspect, an embodiment of the present disclosure provides a media content processing method. The processing method includes:
displaying media content to be posted on an editing page of media content, where the media content to be posted is obtained based on a media content generation page;
displaying an entry control of a background music panel of the media content to be posted on the editing page of the media content;
displaying the background music panel on the editing page in response to a triggering operation on the entry control, where the background music panel includes at least one background music item; and
displaying, in response to a triggering operation on a first target background music item among the at least one background music item, a first music sticker corresponding to the first target background music item on the editing page, where the first music sticker is configured to be displayed in target media content that is posted.

According to a second aspect, an embodiment of the present disclosure provides a media content display method, where media content is obtained through processing by the method according to the first aspect. The display method includes:
displaying target media content on a media content display page; and
displaying a first music sticker in the target media content, where the first music sticker is associated with music of the target media content, the first music sticker is added to the target media content by a posting user of the target media content on an editing page of media content of a current application, and the first music sticker is an interactive sticker.

According to a third aspect, an embodiment of the present disclosure provides a media content processing device. The processing apparatus includes:
a first display module configured to display media content to be posted on an editing page of media content, where the media content to be posted is obtained based on a media content generation page;
the first display module is further configured to display an entry control of a background music panel of the media content to be posted on the editing page of the media content; and
a first processing module configured to display the background music panel on the editing page in response to a triggering operation on the entry control, where the background music panel includes at least one background music item; and
the first processing module is further configured to display, in response to a triggering operation on a first target background music item among the at least one background music item, a first music sticker corresponding to the first target background music item on the editing page, where the first music sticker is configured to be displayed in target media content that is posted.

According to a fourth aspect, an embodiment of the present disclosure provides a media content display device, where media content is obtained through processing by the method according to the first aspect. The display apparatus includes:
a second display module configured to display target media content on a media content display page, and the second display module is further configured to display a first music sticker in the target media content, where the first music sticker is associated with music of the target media content, the first music sticker is added to the target media content by a posting user of the target media content on an editing page of media content of a current application, and the first music sticker is an interactive sticker.

According to a fifth aspect, an embodiment of the present disclosure provides an electronic device. The electronic device includes: a processor and a memory, where
the memory stores computer-executable instructions, and
the processor executes the computer-executable instructions stored in the memory, to cause the processor to perform the media content processing method according to the first aspect and various possible designs of the first aspect as described above, and/or the media content display method according to the second aspect and various possible designs of the second aspect as described above.

According to a sixth aspect, an embodiment of the present disclosure provides a computer-readable storage medium. The computer-readable storage medium has computer-executable instructions stored therein that, when executed by a processor, cause the media content processing method according to the first aspect and various possible designs of the first aspect as described above, and/or the media content display method according to the second aspect and various possible designs of the second aspect as described above to be implemented.

According to a seventh aspect, an embodiment of the present disclosure provides a computer program product. The computer program product includes a computer program that, when executed by a processor, causes the media content processing method according to the first aspect and various possible designs of the first aspect as described above, and/or the media content display method according to the second aspect and various possible designs of the second aspect as described above to be implemented.

### BRIEF DESCRIPTION OF DRAWINGS

In order to describe the technical solutions in embodiments of the present disclosure or in the related art more clearly, the accompanying drawings for describing the embodiments or the related art are briefly described below. Apparently, the accompanying drawings in the following description are some embodiments of the present disclosure, and those of ordinary skill in the art may still derive other accompanying drawings from these accompanying drawings without creative efforts.
FIG. 1 is a schematic flowchart of a media content processing method according to an embodiment of the present disclosure;
FIG. 2a to FIG. 2l are schematic diagrams of an interface of a media content processing method according to an embodiment of the present disclosure;
FIG. 3 is a second schematic flowchart of a media content processing method according to an embodiment of the present disclosure;
FIG. 4a to FIG. 4b are schematic diagrams of an interface of a media content display method according to an embodiment of the present disclosure;
FIG. 5 is a structural block diagram of a media content processing device according to an embodiment of the present disclosure;
FIG. 6 is a structural block diagram of a media content display device according to an embodiment of the present disclosure; and
FIG. 7 is a schematic structural diagram of hardware of a media content processing device according to an embodiment of the present disclosure.

### BRIEF DESCRIPTION OF DRAWINGS

In order to illustrate the technical solutions of the embodiments of the present disclosure more clearly, the drawings of the embodiments will be briefly introduced below. Obviously, the drawings in the following description only relate to some embodiments of the present disclosure, and are not intended to limit the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

In order to solve the above-mentioned problem of the monotonous background music forms and poor interactivity in existing media content creation, the inventors of the present disclosure have discovered that music-related feature information can be displayed in the form of stickers. That is, users can enrich musical interaction forms of works by adding music-associated stickers to media content to be posted. This offers simplified operations, enhanced creation efficiency, and improved interactivity. Based on this, the present disclosure provides a media content processing and display method, device, and apparatus, a storage medium and a program product.

It should be noted that the media content processing and display method, device, and apparatus, the storage medium and the program product provided in the present disclosure can be applied to various media content posting scenarios.

The execution entity of the media content processing method provided in the embodiments of the present disclosure may be an electronic device, or an application APP, a web page, etc. in the electronic device. The electronic device may include a mobile phone, a tablet computer, a wearable electronic device, an in-vehicle device, an augmented reality (AR)/virtual reality (VR) device, a notebook computer, an ultra-mobile personal computer (UMPC), a netbook, a personal digital assistant (PDA), a smart television, a smart screen, a high-definition television, a 4K television, a smart speaker, a smart projector, and other smart home devices. The embodiments of the present disclosure do not impose limitation on the specific type of electronic device. The embodiments of the present disclosure do not impose limitation on the type of operating system of the electronic device, and the operating system may be an Android system, a Linux system, a Windows system, an iOS system, or the like.

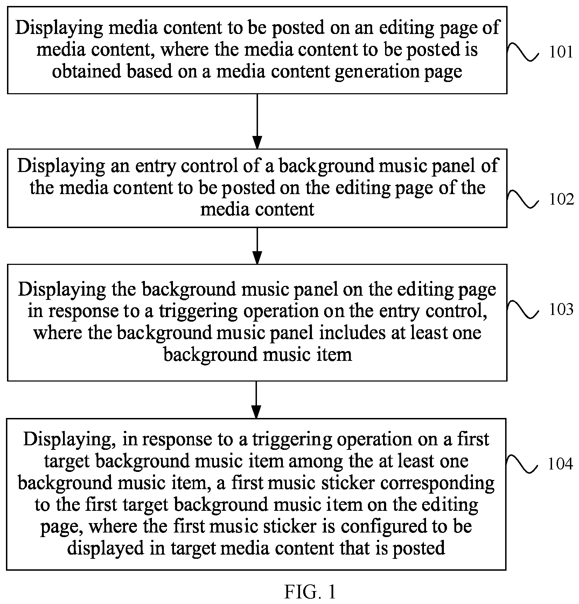

Referring to FIG. 1, FIG. 1 is a schematic flowchart of a media content processing method according to an embodiment of the present disclosure. The media content processing method includes the following steps.

101: Displaying media content to be posted on an editing page of media content, where the media content to be posted is obtained based on a media content generation page.

Specifically, the media content to be posted may be obtained through shooting, uploading, or other means. For example, the media content generation page may be a shooting page for shooting a video material, or a material import page for importing a video material.

102: Displaying an entry control of a background music panel of the media content to be posted on the editing page of the media content.

103: Displaying the background music panel on the editing page in response to a triggering operation on the entry control, where the background music panel includes at least one background music item.

In order to provide users with more choices, it is considered to display a plurality of candidate background music items to the users in the form of the background music panel.

Specifically, after a media content application installed on the electronic device is launched, the application can display the editing page on the electronic device. The editing page may include a collection of a plurality of functions and is configured to edit the media content to be posted. The editing page includes the entry control of the background music panel of the media content to be posted. The entry control may be displayed in the form of an icon, text, a symbol, an image, etc., or alternatively, the entry control may be displayed based on a combination of a plurality of forms. The triggering operation (e.g., a tap or a long press) on the entry control is received, and in response to the triggering operation, the background music panel is displayed on the editing page. The background music panel displays one or more background music items. The background music item may include feature information of the background music, such as song cover, author, song name, etc.

For example, the background music panel may be configured to at least select a music sticker corresponding to a background music item. Built on this, the background music panel may further be configured to select background music.

104: Displaying, in response to a triggering operation on a first target background music item among the at least one background music item, a first music sticker corresponding to the first target background music item on the editing page, where the first music sticker is configured to be displayed in target media content that is posted.

Specifically, after presenting the one or more background music items in the background music panel, a selection command (e.g., a triggering operation on an associated control, a gesture command, etc.) for a target background music item among the one or more background music items may be received. In response to the selection command, a corresponding music sticker is generated based on feature information of the target background music item, and the music sticker is displayed on the editing page, so that the music sticker is displayed in the target media content that is posted.

The embodiments provide the media content processing and display method and device, the storage medium and the program product. The method includes: displaying the media content to be posted on the editing page of the media content, where the media content to be posted is obtained based on the media content generation page; displaying the entry control of the background music panel of the media content to be posted on the editing page of the media content; displaying the background music panel on the editing page in response to the triggering operation on the entry control, where the background music panel includes at least one background music item; and displaying, in response to the triggering operation on the first target background music item among the at least one background music item, the first music sticker corresponding to the first target background music item on the editing page, where the first music sticker is configured to be displayed in the target media content that is posted. The media content processing method provided in the embodiments of the present disclosure displays the entry control of the background music panel of the media content to be posted on the editing page of the media content, thereby enabling selection of background music in the background music panel and displaying the music sticker generated based on the background music on the editing page. This enriches background music forms, enhances interactivity, simplifies operations, and significantly improves creation efficiency.

In an embodiment of the present disclosure, in order to facilitate user selection of background music items in the background music panel, the background music items may be selected by triggering an associated control. Specifically, the triggering operation on the first target background music item among the at least one background music item may include: a triggering operation on a target sticker control associated with the first target background music item among the at least one background music item.

In an embodiment of the present disclosure, displaying the first music sticker corresponding to the first target background music item on the editing page may include: determining corresponding song information based on the first target background music item; generating the first music sticker corresponding to the song information based on the song information; and displaying the first music sticker on the editing page. Optionally, the song information includes at least one of the following: a song cover, a songwriter, an artist name, a song name, lyrics, rhythm information, or song duration.

Specifically, in response to the triggering operation on the first target background music item, song information associated with the first target background music item may be obtained from a cloud music library. Content of the song information may then be partially or completely presented on the first music sticker in a specific form, so that the music sticker reflects the user's musical preference. In addition, in order to facilitate an edit operation on the music sticker such as style switching, favoriting, or deletion, the music sticker may be associated with a control, to receive a triggering operation on the control, for implementing editing of the music sticker.

The first music sticker configured to be displayed in the target media content that is posted is an interactive sticker. The interactive sticker refers to a sticker capable of obtaining an interactive operation result through a triggering operation. For example, triggering the interactive sticker can trigger switching to another page, or triggering preset buttons on the interactive sticker can implement corresponding functions.

As seen from the above-mentioned description, the media content processing method provided in the embodiments of the present disclosure displays the entry control of the background music panel of the media content to be posted on the editing page of the media content, thereby enabling the selection of the background music in the background music panel and displaying the music sticker generated based on the background music on the editing page. This enriches music interaction forms, enhances interactivity, simplifies operations, and significantly improves creation efficiency.

In an embodiment of the present disclosure, there are a plurality of manners of triggering display of the background music panel on the editing page.

In an implementation, in order to facilitate quick user access to the background music panel for music sticker selection, the entry control of the background music panel may be directly provided on the editing page. Specifically, step 102 may include: displaying a first control on the editing page of the media content; and correspondingly, step 103 may include: displaying the background music panel in response to a triggering operation on the first control.

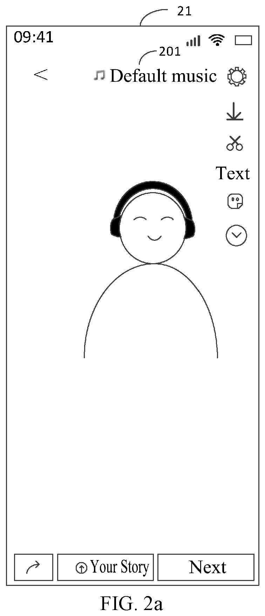

For example, taking a mobile phone as an example, after a media content application is launched, the mobile phone displays an interface 21 as shown in FIG. 2a, where the interface 21 is the editing page. The editing page may include a collection of a plurality of editing functions and is mainly used to edit a video material.

As shown in FIG. 2a, the interface 21 includes an entry control 201. The entry control 201 is configured to access the background music panel. The entry control 201 may be displayed in the form of an icon, text, a symbol, an image, etc., or alternatively, the entry control may be displayed based on a combination of a plurality of forms. The present disclosure does not impose limitation on display parameters such as color, size, etc. of the entry control 201. For example, as shown in FIG. 2a, the entry control 201 is displayed in the form of "icon + text". It can be understood that the entry control 201 can display a name of currently selected background music. When first entering the editing page, the entry control may be in a state of no background music being selected or in a state of default background music.

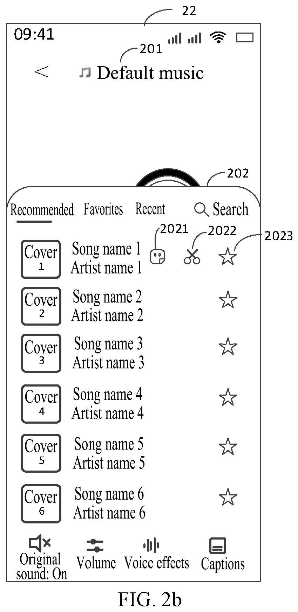

The application receives a triggering operation (e.g., a tap operation or a long press operation) on the entry control 201. In response to the triggering operation, the mobile phone can, for example, display interface 22 as shown in FIG. 2b.

As shown in FIG. 2b, the interface 22 includes: a background music panel 202. The embodiments of the present disclosure do not impose limitation on display parameters of the background music panel 202, such as size, color, display position, display transparency, etc. The background music panel 202 may be provided on top of the editing page, so that the user can see various information in the background music panel first. The background music panel 202 is configured to display favorited background music items, recommended background music items, and recently used background music items, etc. The background music panel may further include a search control configured, which is used to search for background music items.

It should be noted that areas other than the background music panel 202 in the interface 22 can display relevant screen content of the editing page, allowing the user to see partial screen content of the editing page through the areas other than the background music panel 202 while viewing the background music panel.

As shown in FIG. 2b, the background music panel 202 may include a plurality of recommended background music items, with cover 1 to cover 6 corresponding tobackground music item 1 to background music item 6, respectively. Each background music item may include respectively associated controls, which may include control 2021, control 2022, and control 2023, where the control 2021 may be configured to trigger display of the music sticker corresponding to the background music item on the editing page, the control 2022 may be configured to trigger display of a trimming page for the background music item to trim the background music item, and the control 2023 may be configured to trigger favoriting of the background music item. Each background music item may include an associated image (e.g., the cover 1), and music feature information (e.g., song name 1, artist name 2). The associated image and the music feature information may be used as controls associated with the background music item, where the controls are configured to trigger selection of the corresponding background music item.

It should be noted that controls associated with each background music item may not be directly displayed, or only some of the controls may be displayed. Controls that are not displayed may be displayed after the corresponding background music item is triggered and selected. For example, the control 2021 and the control 2022 may be displayed after the background music item 1 is selected. This is not limited in the embodiments of the present disclosure.

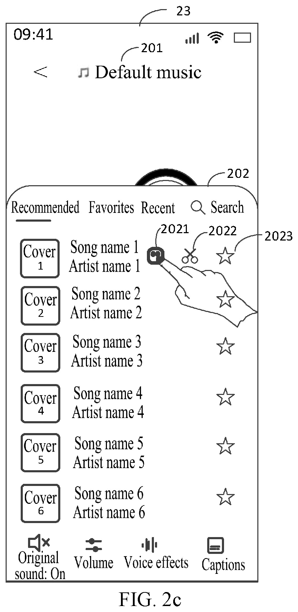

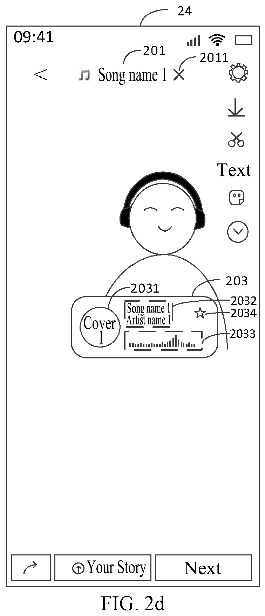

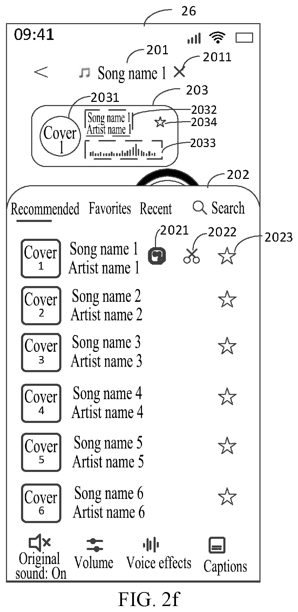

As shown in an interface 23 in FIG. 2c, a triggering operation (e.g., a tap operation or a long press operation) on the control 2021 is received. In response to the triggering operation, the control 2021 may be highlighted, e.g., bolded, color-changed, etc. Meanwhile, as shown in FIG. 2d or FIG. 2f, a music sticker 203 associated with the control 2021 may be additionally displayed on the editing page of interface 24 or interface 26. Optionally, on the basis of this, as shown in FIG. 2d, the control 201 switches from the display state of default background music to a state of background music being selected. As shown in FIG. 2d, the control 201 displays song name 1 and may further display control 2011. The control 2011 is configured to trigger cancellation of the current background music. Optionally, the control 2011 is configured to trigger deletion of the music sticker 203 corresponding to the current background music. It should be noted that the descriptions of the background music panel 202, the control 2021, the control 2022, and the control 2023 in FIG. 2d and FIG. 2f may refer to the foregoing embodiments, which are not described herein again.

In an embodiment of the present disclosure, in order to present the user's musical preferences well, the first music sticker may include at least one of the following: an associated image area, where the associated image area is configured to display a song cover, and/or the associated image area is displayed in a preset dynamic change manner; a music feature display area, where the music feature display area is configured to display feature information of music corresponding to the first target background music item; and an associated text display area, where the associated text display area is configured to display text information associated with the first target background music item. The feature information of the music may include at least one of the following: melody information of the music, rhythm information of the music, and accent information of the music. The text information associated with the first target background music item may include at least one of the following: lyrics, songwriter, and artist name of the song corresponding to the first target background music item. Optionally, in order to synchronize the display of text information such as the lyrics with music playback progress, the associated text display area is configured to display the text information in a scrolling manner.

For example, as shown in FIG. 2d, the music sticker 203 includes an associated image area 2031, an associated text display area 2032, and a music feature display area 2033. The associated image area 2031 displays a song cover. Optionally, the area 2031 may further rotate during display. The area 2032 displays song name 1 and artist name 1. Optionally, the area 2032 may further display lyrics. For example, as the background music plays, the song name and the artist name may be displayed during the musical intro portion, and the corresponding lyrics may be displayed when reaching lyric-containing portions. In order to save display space, the text information may be displayed in a scrolling manner. The area 2033 displays a music spectrum, and the spectrum may be displayed with a bouncing effect in synchronization with the rhythm of the music. The music sticker 203 further includes a control 2034, where the control 2034 is configured to trigger favoriting and unfavoriting of the music sticker 203 and/or the music corresponding to the music sticker 203. Different display styles may be used to distinguish between a favorited state, and an unfavorited state. For example, a star icon may be set as filled or unfilled, or the star icon may be set to different fill colors.

In an embodiment of the present disclosure, the music sticker may be displayed at a plurality of positions on the editing page. In an implementation, the music sticker may be displayed at a preset coordinate position on the editing page. As shown in FIG. 2d, the sticker 203 may be displayed in a central area of the interface 24.

In another implementation, the music sticker may be displayed outside a display area of a target object (e.g., a portrait). Specifically, displaying the first music sticker corresponding to the first target background music item on the editing page may include: displaying the first music sticker corresponding to the first target background music item at a first position on the editing page, where the first position is located outside the display area of the target object.

Specifically, the display area of the target object may be identified to obtain boundary coordinates. Display position coordinates of the music sticker may be determined based on the boundary coordinates, to prevent the music sticker from occluding the target object and compromising visual integrity.

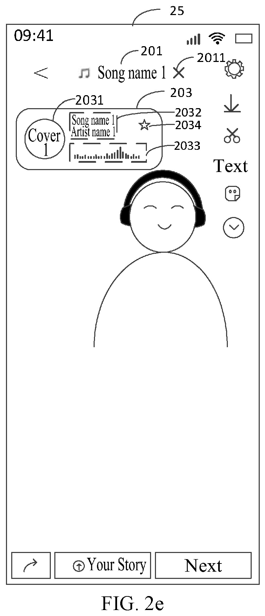

For example, as shown in interface 25 of FIG. 2e, the music sticker 203 may be provided at the upper-left corner of the portrait to avoid overlapping with the portrait. In addition, the descriptions of the control 201, the control 2011, the control 203, and the control 2031 to the control 2034 in FIG. 2e may refer to the descriptions of the above-mentioned embodiments, such as the description of FIG. 2d, which are not described herein again.

In an embodiment of the present disclosure, after displaying the first music sticker on the editing page, the background music panel may be hidden or continue to be displayed. For example, viewed in conjunction with FIG. 2c, FIG. 2d and FIG. 2f, after triggering the control 2021, as shown in FIG. 2f, the background music panel 202 may continue to be displayed. Alternatively, as shown in FIG. 2d, the background music panel 202 may be hidden. This may be specifically set as required. This is not limited in the embodiments of the present disclosure. The descriptions of the control 201, the control 2011, the control 203, and the control 2031 to the control 2034 in FIG. 2f may refer to the descriptions of the above-mentioned embodiments, which are not described herein again.

In an embodiment of the present disclosure, in order to completely present the music sticker, displaying the first music sticker corresponding to the first target background music item on the editing page may include: displaying the first music sticker on top of the loaded media content on the editing page.

In an embodiment of the present disclosure, the media content to be posted includes an image collection including a plurality of images and/or videos, and displaying the first music sticker corresponding to the first target background music item on the editing page may include: displaying the first music sticker on a target image in the image collection on the editing page.

Specifically, take the media content to be posted including a plurality of images as an example. The plurality of images include image 1, image 2, and image 3. The music sticker may be displayed on one or more of image 1, image 2, or image 3. Given that after the media content to be posted is posted, the plurality of images may be played in a certain order on a terminal of a consumer user. Assuming the playback order is image 1, image 2, and image 3, in order to display the music sticker in a timely and emphasized manner, the first music sticker may be displayed on the image 1. Of course, when the consumer user needs to perform same-style creation using the media content as a template, in order to facilitate operation, it may be configured such that regardless of whether the consumer user triggers the shooting of media content with the same music from a display interface of any image (for example, an image that displays the sticker or an image that does not display the sticker) and enters a creation page, the music sticker may be displayed on the creation page of the consumer user.

In an embodiment of the present disclosure, after displaying the first music sticker corresponding to the first target background music item on the editing page, the method may further include: updating, in response to a triggering operation on the fourth target background music item among the at least one background music item, the first music sticker that corresponds to the first target background music item being displayed on the editing page to a fourth music sticker corresponding to the fourth target background music item.

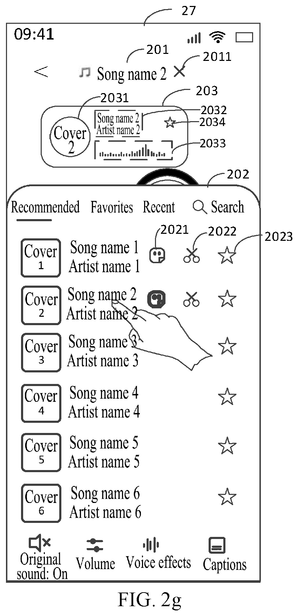

For example, viewed in conjunction with FIG. 2f and FIG. 2g, as shown in FIG. 2f, the current background music is song 1 corresponding to the background music item 1. As shown in an interface 27 in FIG. 2g, a triggering operation (e.g., a tap operation or a long press operation) on the background music item 2 is received. In response to the triggering operation, the current background music is switched from song 1 to song 2 corresponding to background music item 2, the song name 1 displayed in the control 201 is updated to song name 2, and display content in the music sticker 203 is correspondingly changed. The area 2031 displays cover 2, the area 2032 displays song name 2 and artist name 2, and the area 2033 displays the music spectrum associated with the background music item.

In an embodiment of the present disclosure, after displaying the first music sticker corresponding to the first target background music item on the editing page, the method may further include: switching a display style of the first music sticker in response to a triggering operation on the first music sticker and/or a style switching control.

For example, the display style may include colors, presence/absence of controls such as favorite control, layout positions of the display areas (including the above-mentioned spectrum area, the lyrics area, the cover area, etc.), and dynamic effects.

Specifically, a plurality of pre-designed styles of music stickers may be provided. For example, Style One retains a favorite control; Style Two does not display the favorite control; Style Three uses the first background color; Style Four uses the second background color; Style Five has no overlap between the associated image area and other areas (such as the associated text display area and the music feature display area); and Style Six has overlap between the associated image area and other areas, where, for example, the associated text display area and the music feature display area may be disposed on top of the associated image area.

In an embodiment of the present disclosure, different edit operations for the music sticker may be implemented through different triggering operations. After displaying the first music sticker corresponding to the first target background music item on the editing page, the method may further include: editing the size of the first music sticker in response to the first triggering operation on the first music sticker; or, deleting the first music sticker in response to the second triggering operation on the first music sticker; or adjusting display duration of the first music sticker in response to the third triggering operation on the first music sticker; or adjusting the shape of the first music sticker in response to the fourth triggering operation on the first music sticker.

Specifically, different editing processing may be performed through different triggering operations. For example, the size of the music sticker may be adjusted through a two-finger pinch triggering operation, and the music sticker may be delated through a long press operation or through a triggering operation of dragging the music sticker to a target area. A duration adjustment control may also be displayed in response to a tap operation on the music sticker, and display duration of the music sticker may then be adjusted in response to a triggering operation on the duration adjustment control. For example, a plurality of candidate times may be displayed in the duration adjustment control for user selection. The shape of the first music sticker may also be adjusted through a triggering operation such as a double-tap operation or a knuckle tap operation on the first music sticker, or a drag operation on a border of the first music sticker.

In another implementation, in order to facilitate efficient selection of music stickers by users during sticker selection, the entry control for accessing the background music panel may be provided in a sticker panel, where the sticker panel includes a plurality of different types of sticker controls. Specifically, step 102 may include: displaying a sticker panel of the media content to be posted on the editing page of the media content, where the sticker panel includes a second control; step 103 may include: displaying the background music panel in response to a triggering operation on the second control. Optionally, displaying the sticker panel of the media content to be posted on the editing page of the media content may include: displaying a third control on the editing page of the media content; and displaying the sticker panel of the media content to be posted on the editing page in response to a triggering operation on the third control.

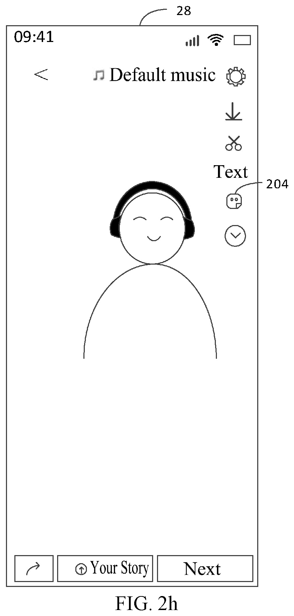

For example, taking a mobile phone as an example, after a media content application is launched, the mobile phone displays interface 28 as shown in FIG. 2h, where the interface 28 is the editing page. The editing page may include a collection of a plurality of editing functions and is mainly used to edit a video material.

As shown in FIG. 2h, the interface 28 includes an entry control 204. The entry control 204 is configured to access the sticker panel. The entry control 204 may be displayed in the form of icon, text, symbol, image, etc., or alternatively, the entry control may be displayed based on a combination of a plurality of forms. The present disclosure does not impose limitation on display parameters such as color, size, etc. of the entry control 204. For example, as shown in FIG. 2h, the entry control 204 is displayed in the form of "icon + text".

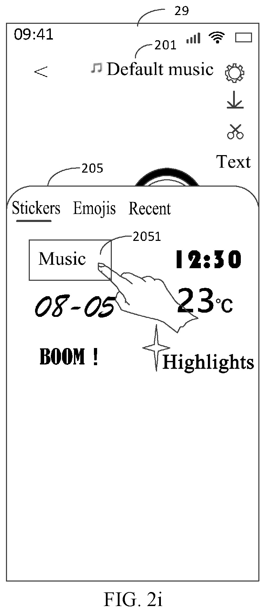

The application receives a triggering operation (e.g., a tap operation or a long press operation) on the entry control 204. In response to the triggering operation, the mobile phone can, for example, display interface 29 as shown in FIG. 2i.

As shown in FIG. 2i, the interface 29 includes: a sticker panel 205. The embodiments of the present disclosure do not impose limitation on display parameters of the sticker panel 205, such as size, color, display position, display transparency, etc. The sticker panel 205 may be provided on top of the editing page, so that the user sees various information in the background music panel first. The sticker panel 205 is configured to display various types of stickers, such as text stickers or pattern stickers, etc.

It should be noted that areas other than the sticker panel 205 in the interface 29 can display relevant screen content of the editing page, allowing the user to see partial screen content of the editing page through the areas other than the sticker panel 205 while viewing the background music panel.

As shown in FIG. 2i, the the sticker panel 205 may include a plurality of stickers, which include an entry control 2051 of the background music panel. The entry control 2051 is configured to trigger selection of music stickers. The entry control 2051 may be displayed in the form of icon, text, symbol, image, etc., or alternatively, the entry control may be displayed based on a combination of a plurality of forms. The present disclosure does not impose limitation on display parameters of the entry control 2051, such as color, size, etc. For example, as shown in FIG. 2i, the entry control 2051 is displayed in the form of "border + text".

In an embodiment of the present disclosure, after displaying the sticker panel, functionality of the second control may be set according to two cases regarding whether a background music item is currently selected.

In an implementation, when no background music is currently set, the second control is configured to trigger selection of default background music. Specifically, a triggering operation on the second control is received, and in response to the triggering operation on the second control, when no background music is currently selected, the background music panel is displayed, and/or a second music sticker corresponding to a second target background music item with a preset order in the background music panel is displayed on the editing page.

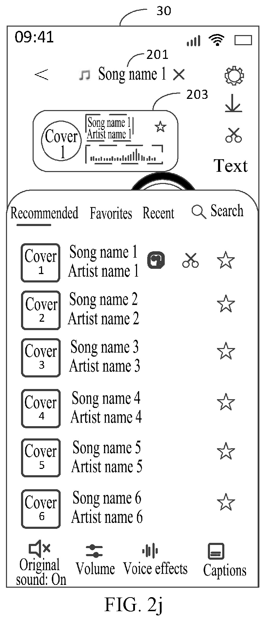

For example, the first background music item (e.g., song 1 corresponding to the background music item 1) may be set as the default background music. As shown in FIG. 2i, the control 201 displays that no background music is currently selected. A triggering operation (e.g., a tap operation or a long press operation) on the control 2051 in the sticker panel 205 is received, and in response to the trigger operation, the music sticker 203 corresponding to the background music item 1 is displayed in interface 30, as shown in FIG. 2j.

In another implementation, in the case of the background music being currently selected, the second control is configured to trigger selection of a music sticker corresponding to the current background music. The triggering operation on the second control is received, and in response to the triggering operation on the second control, in the case of a song corresponding to a third target background music item being currently selected as the background music, a third music sticker corresponding to the third target background music item is displayed on the editing page.

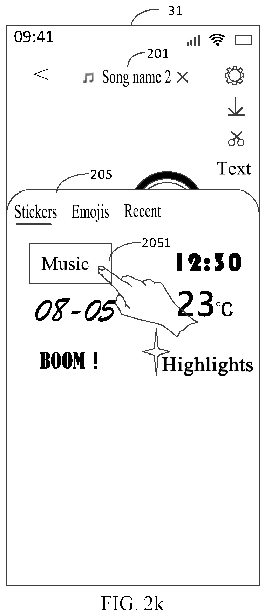

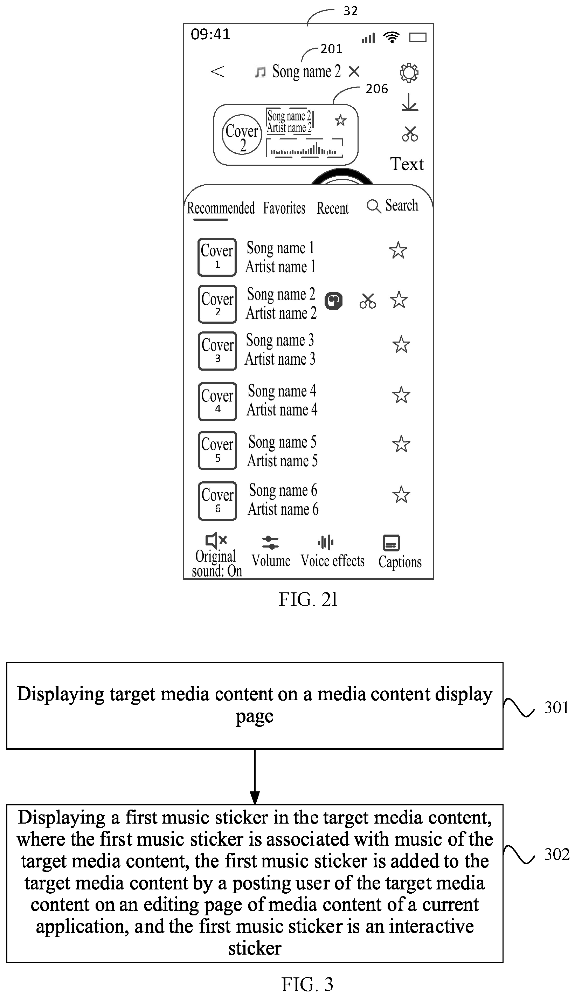

For example, as shown in the interface 31 of FIG. 2k, the song name 2 displayed in the control 201 indicates that the currently selected background music is the song 2 corresponding to the background music item 2. A triggering operation (e.g., a tap operation or a long press operation) on the control 2051 in the sticker panel 205 is received, and in response to the trigger operation, a music sticker 206 corresponding to the song 2 corresponding to the background music item 2 is displayed in interface 32 as shown in FIG. 2l, where the music sticker 206 displays cover 2, song name 2, artist name 2, and the music spectrum that are associated with the background music item 2.

In an embodiment of the present disclosure, in order to implement communication and sharing, the media content to be posted may be posted. Specifically, target media content may be generated based on the first music sticker, and in response to a post operation for the target media content, the target media content may be posted.

Specifically, the music sticker is selected through the background music panel and is displayed on the editing page. If the current music sticker requires adjustments to the position, size, style, etc., the music sticker may be edited first. After the editing is completed, a video draft may be generated based on the first music sticker, and subsequently, the target media content may be generated based on the video draft. The video draft may include original material and editing information, where the editing information is configured to indicate edit operations performed on the original material (for example, adding a music sticker, etc.). The target media content may be a video segment generated based on the video draft. The target media content that is posted may be displayed on a media content display page of a current application.

It should be noted that the embodiments shown in FIG. 2a to FIG. 2l are merely examples of the media content processing method provided in the embodiments of the present disclosure. In actual scenarios, some page layouts, display parameters, as well as implementations of controls and entries may be flexibly set according to requirements.

Referring to FIG. 3, FIG. 3 is a schematic flowchart of a media content display method according to an embodiment of the present disclosure. According to the media content display method, media content is obtained through processing by the media content processing method provided in the above-mentioned embodiment, such as the embodiment shown in FIG. 1. The method includes the following steps.

301: Displaying target media content on a media content display page.

302: Displaying a first music sticker in the target media content, where the first music sticker is associated with music of the target media content, the first music sticker is added to the target media content by a posting user of the target media content on an editing page of media content of a current application, and the first music sticker is an interactive sticker.

For example, the interactive sticker refers to a sticker capable of obtaining an interactive operation result through a triggering operation. For example, triggering the interactive sticker can trigger switching to another page, or triggering preset buttons on the interactive sticker can implement corresponding functions.

Specifically, the execution entity of this embodiment of the present disclosure may be an electronic device, or an application APP, a web page, etc. in the electronic device. For example, it may be similar to the execution entity of the embodiment shown in FIG. 1.

For example, a media content posting user, such as user 1, adds the first music sticker to the media content to be posted on the editing page of application 1 on an electronic device through application 1, and then generates the target media content based on the first music sticker and publishes the target media content. For example, the target media content is uploaded to a cloud server. When a media content consumer user, such as user 2, downloads the target media content from the cloud server through application 2 on the electronic device, the target media content is displayed on the media content display page of application 2, and the target media content displays the interactive first music sticker. For example, user 1 and user 2 may be the same user, and application 1 and application 2 may be the same application.

It can be seen from the above-mentioned description that the media content display method provided in the embodiments of the present disclosure displays song information related to the background music in the media content in the form of adding stickers, which facilitates the creation for the posting user, improves creation efficiency, and also enables the consumer user to appreciate a work with relatively high musical taste in a timely manner.

In an embodiment of the present disclosure, the first music sticker is generated based on song information associated with the music of the target media content, where the song information includes at least one of the following: song cover, songwriter, artist name, song name, lyrics, music feature information, and song duration.

In an embodiment of the present disclosure, the first music sticker includes an associated image area, where the associated image area is configured to display the song cover, and/or the associated image area is displayed in a preset dynamic changing manner.

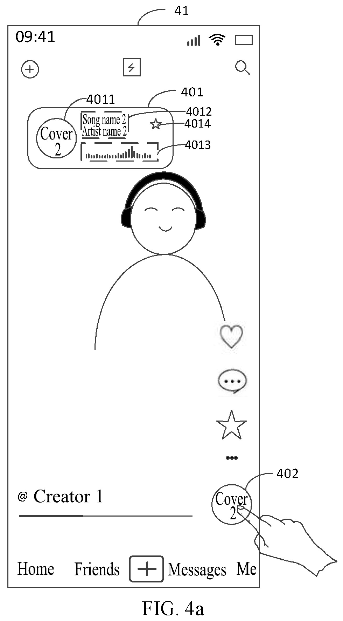

For example, taking a mobile phone as an example, after a media content application is launched, the mobile phone displays interface 41 as shown in FIG. 4a, where interface 41 is a display page. The display page may include a collection of a plurality of functions, and the display page is mainly used to display the target media content posted by the posting user, and perform task processing on the displayed target media content, such as favoriting, liking, commenting, etc.

As shown in FIG. 4a, interface 41 includes a music sticker 401. For example, the music sticker 401 includes an associated image area 4011, and the associated image area 4011 displays the song cover. Optionally, the area 4011 may also rotate to display the song cover.

In an embodiment of the present disclosure, the first music sticker includes a music feature display area, where the music feature display area is configured to display feature information of the music of the target media content. Optionally, the feature information of the music includes at least one of the following: melody information of the music, rhythm information of the music, and accent information of the music.

As shown in FIG. 4a, the music sticker 401 also includes a music feature display area 4013.

For example, the music feature display area 4013 displays a music spectrum, and the spectrum may be displayed with a bouncing effect in synchronization with the rhythm of the music.

In an embodiment of the present disclosure, the first music sticker includes an associated text display area, where the associated text display area is configured to display text information associated with the music of the target media content. Optionally, the text information associated with the music of the target media content includes at least one of the following: lyrics, a songwriter, and an artist name of a song corresponding to the music of the target media content. Optionally, the associated text display area is configured to display the text information in a scrolling manner.

As shown in FIG. 4a, the music sticker 401 also includes an associated text display area 4012.

For example, the associated text display area 4012 displays song name 2 and artist name 2. Optionally, the associated text display area 4012 may also display lyrics. For example, as the background music plays, song name and artist name may be displayed during the musical intro portion, and the corresponding lyrics may be displayed when reaching lyric-containing portions. In order to save display space, the text information may be displayed in a scrolling manner. The area 4013 displays a music spectrum, and the spectrum may be displayed with a bouncing effect in synchronization with the rhythm of the music. The music sticker 401 also includes a control 4014, where the control 4014 is configured to trigger favoriting and unfavoriting of the music sticker 401 and/or music corresponding to the music sticker 401. The control corresponding to favoriting and the control corresponding to unfavoriting may be displayed in different styles. For example, a star icon may be set as filled or unfilled, or the star icon may be set to be in different fill colors.

In an embodiment of the present disclosure, in order to facilitate user to organize and manage the content of interest, the method may also include: favoriting or unfavoriting the music corresponding to the first music sticker in response to a triggering operation on the fifth control of the first music sticker of the target media content in the display interface.

For example, as shown in FIG. 4a, the music sticker 401 further includes the control 4014, where the control 4014 is configured to trigger favoriting and unfavoriting of the music sticker 401 and/or the music corresponding to the music sticker 401. Different display styles may be used to distinguish between a favorited state and an unfavorited state. For example, a star icon may be set as filled or unfilled, or the star icon may be set to be in different fill colors.

In an embodiment of the present disclosure, in order to facilitate user interaction with music in the work, in response to a triggering operation on the sixth control of the first music sticker of the target media content in the display interface, a playback control operation is performed on the music corresponding to the first music sticker.

For example, the music sticker 401 also includes a pause control and/or a music progress bar control. For example, when the progress bar control is dragged, the music corresponding to the music sticker 401 is adjusted to play from a corresponding track time point. In this case, the content of the work may or may not follow the progress adjustment of the music progress bar. For example, when the current media content is a video, the video progress may be adjusted synchronously with the music progress; and when the media content is multi-image content, the image viewing progress is not adjusted synchronously with the music progress.

In an embodiment of the present disclosure, displaying the first music sticker in the target media content may include: dynamically displaying the first music sticker based on playback of the music of the target media content.

For example, as shown in FIG. 4a, the associated image area 4011 in the music sticker 401 may rotate to display the displayed song cover. Song name 2, artist name 2 and lyrics (not shown) displayed in the associated text display area 4012 may be displayed in a scrolling manner in synchronization with playback progress of the background music. The music spectrum displayed in the music feature display area 4013 may be displayed with a bouncing effect in synchronization with the rhythm of the music.

In an embodiment of the present disclosure, the method may also include: switching to the music detail page of the music corresponding to the first music sticker in response to a triggering operation on the first music sticker of the target media content in the display interface.

In an embodiment of the present disclosure, the method may also include: entering the shooting page associated with the first music sticker and displaying the first music sticker on the shooting page, in response to a shooting operation associated with the first music sticker of the target media content in the triggered display interface.

In consideration of a shooting requirement of the shooting page, in order to fully display shooting content, an initial position of the first music sticker displayed on the shooting page may be different from an initial position of the first music sticker on the editing page as described in the above-mentioned embodiment of the media content processing method (for example, the central area of the editing page or an area outside a target object display area). The first music sticker may be disposed in a corner of the shooting page to reserve larger space for the shooting content. For example, the music sticker may be displayed in the top-left corner of the shooting page.

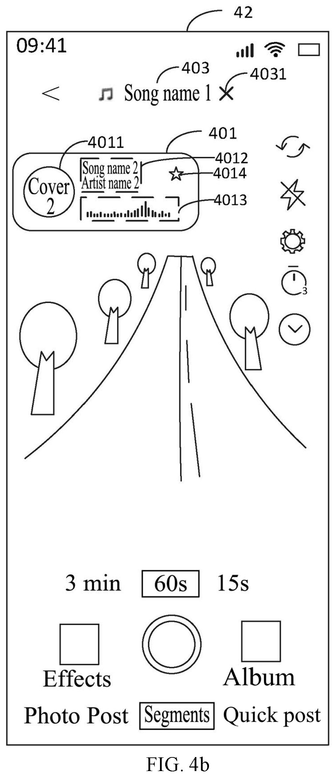

As shown in FIG. 4a, the interface 41 also includes a control 402. The music sticker 401 or the control 402 may be configured to trigger the display of the music detail page or the shooting page. The music detail page may include detailed information of the music corresponding to the music sticker (e.g., duration of the music, a number of uses, a song name, and an artist name) and operation controls for the music, such as a control for shooting in the same style, a control for playing the full song, a control for favoriting the music, a control for sharing the music, and the like. The control for shooting in the same style is configured to trigger the display of the shooting page. The description of the shooting page and the implementation principle of shooting in the same style may refer to the description of the embodiment shown in FIG. 4b. In some embodiments, the music detail page is also configured to provide a complete track of music corresponding to the background music.

Taking as an example that the control 402 triggers display of the shooting page, a triggering operation (e.g., a tap operation or a long press operation) on the control 402 is received, and interface 42 as shown in FIG. 4b is displayed. The interface 42 displays the shooting page, the shooting page displays a music sticker 401, and a control 403 displays the song name corresponding to the music sticker 401, indicating that the current background music is the music corresponding to music sticker 401, where the music sticker 401 is configured to be displayed in a media material obtained through shooting. The interface 42 also includes the control 403, and the control 403 is configured to trigger the display of the background music panel, to perform processing of the currently selected background music and the corresponding music sticker, such as switching. The control 403 may also include a control 4031, and the control 4031 is configured to trigger the cancellation of the currently selected background music. The interface 42 may also include a collection of a plurality of functions, where the shooting page is configured to obtain a video material through shooting. In addition, the introduction of the areas 4011 to 4013 and the control 4014 in FIG. 4b may refer to the description of FIG. 4a, which are not described herein again.

In some other embodiments, the control 402 triggers the display of the first music detail page, where the first music detail page displays media content works using music corresponding to the first music sticker; The music sticker 401 triggers the display of the second music detail page (e.g., by taping the cover area in the music sticker 401), where the second music detail page displays the media content works using the first music sticker.

It should be noted that the embodiments shown in FIG. 4a to FIG. 4b are merely examples of the media content display method provided in the embodiments of the present disclosure. In actual scenarios, some page layouts, display parameters, as well as implementations of controls and entries may be flexibly set according to requirements.

It can be seen from the above-mentioned description that the media content display method provided in the embodiments of the present disclosure can, by providing the control for entering the shooting page on the media content display page, make it easier for the consumer user to use the target media content displayed on the display page as a template to create a same-style work including the same music sticker, thereby improving creation efficiency.

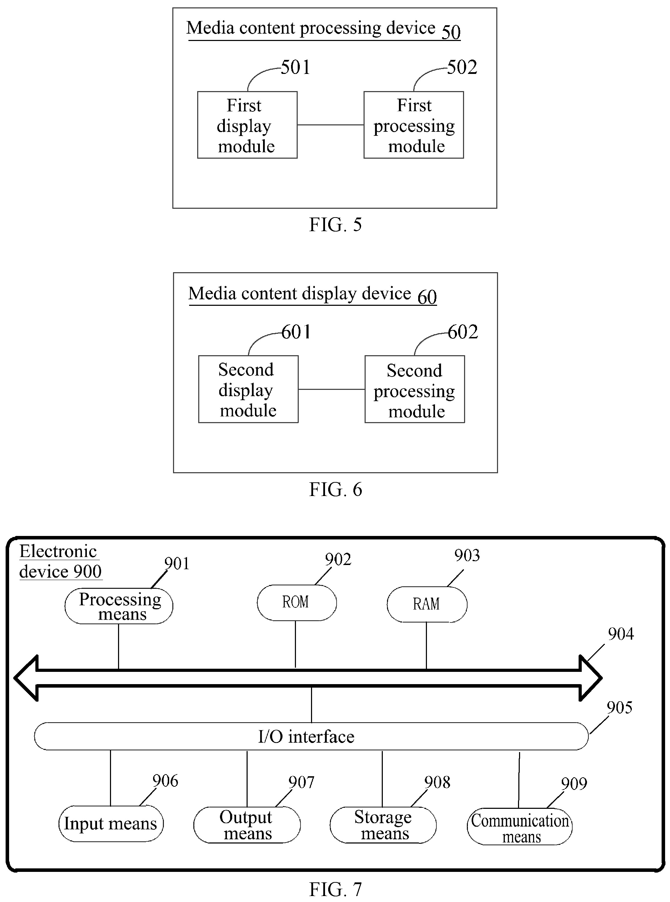

Corresponding to the media content processing method in the above-mentioned embodiment, FIG. 5 is a structural block diagram of a media content processing device according to an embodiment of the present disclosure. For ease of illustration, only parts related to this embodiment of the present disclosure are shown. Referring to FIG. 5, the device 50 includes: a first display module 501 and a first processing module 502.

The first display module 501 is configured to display media content to be posted on the editing page of media content, where the media content to be posted is obtained based on a media content generation page.

The first display module 501 is further configured to display an entry control of a background music panel of the media content to be posted on the editing page of the media content.

The first processing module 502 is configured to display the background music panel on the editing page in response to a triggering operation on the entry control, where the background music panel includes at least one background music item.

The first processing module is further configured to display, in response to a triggering operation on a first target background music item among the at least one background music item, a first music sticker corresponding to the first target background music item on the editing page, where the first music sticker is configured to be displayed in target media content that is posted.

In an embodiment of the present disclosure, the triggering operation on the first target background music item among the at least one background music item includes: a triggering operation on a target sticker control associated with the first target background music item among the at least one background music item.

In an embodiment of the present disclosure, the first display module 501 is specifically configured to: display a first control on the editing page of the media content; and correspondingly, the first processing module 502 is specifically configured to: display the background music panel in response to a triggering operation on the first control.

In an embodiment of the present disclosure, the first display module 501 is specifically configured to: display a sticker panel of the media content to be posted on the editing page of the media content, where the sticker panel includes a second control; and correspondingly, the first processing module 502 is specifically configured to: display the background music panel in response to a triggering operation on the second control.

In an embodiment of the present disclosure, the first display module 501 is specifically configured to: display a third control on the editing page of the media content; and display the sticker panel of the media content to be posted on the editing page in response to a triggering operation on the third control.

In an embodiment of the present disclosure, the first processing module 502 is further configured to: display the background music panel, and/or display, on the editing page, a second music sticker corresponding to a second target background music item with a preset order in the background music panel when no background music is currently selected, in response to the triggering operation on the second control.

In an embodiment of the present disclosure, the first processing module 502 is further configured to: display, when a song corresponding to a third target background music item is currently selected as background music, a third music sticker corresponding to the third target background music item on the editing page in response to the triggering operation on the second control.

In an embodiment of the present disclosure, the first display module 501 is specifically configured to: determine corresponding song information based on the first target background music item; generate the first music sticker corresponding to the song information based on the song information; and display the first music sticker on the editing page.

In an embodiment of the present disclosure, the song information includes at least one of the following: a song cover, a songwriter, an artist name, a song name, lyrics, rhythm information, or song duration.

In an embodiment of the present disclosure, the first music sticker includes at least one of the following: an associated image area, where the associated image area is configured to display a song cover, and/or the associated image area is displayed in a preset dynamic change manner; a music feature display area, where the music feature display area is configured to display feature information of music corresponding to the first target background music item; or an associated text display area, where the associated text display area is configured to display text information associated with the first target background music item.

In an embodiment of the present disclosure, the first processing module 502 is specifically configured to display the first music sticker corresponding to the first target background music item at a first position on the editing page, where the first position is located outside a display area of a target object.

In an embodiment of the present disclosure, the first processing module 502 is specifically configured to display the first music sticker on top of loaded media content on the editing page.

In an embodiment of the present disclosure, the first processing module 502 is specifically configured to display the first music sticker on a target image in an image collection on the editing page.

In an embodiment of the present disclosure, the first processing module 502 is further configured to update, in response to a triggering operation on a fourth target background music item among the at least one background music item, the first music sticker corresponding to the first target background music item displayed on the editing page to a fourth music sticker corresponding to the fourth target background music item.

In an embodiment of the present disclosure, the first processing module 502 is further configured to switch a display style of the first music sticker in response to a triggering operation on the first music sticker and/or a style switching control.

In an embodiment of the present disclosure, the first processing module 502 is further configured to edit a size of the first music sticker in response to a first triggering operation on the first music sticker; or, delete the first music sticker in response to a second triggering operation on the first music sticker; or, adjust display duration of the first music sticker in response to a third triggering operation on the first music sticker; or, adjust a shape of the first music sticker in response to a fourth triggering operation on the first music sticker.

In an embodiment of the present disclosure, the first processing module 502 is further configured to generate target media content based on the first music sticker and post the target media content in response to a post operation for the target media content.

The device provided in this embodiment may be configured to perform the technical solution of the above-mentioned media content processing method embodiment. The implementation principle and technical effects thereof are similar, and are not described herein again in this embodiment.

Corresponding to the media content processing method in the above-mentioned embodiment, FIG. 6 is a structural block diagram of a media content processing device according to an embodiment of the present disclosure. For ease of illustration, only parts related to this embodiment of the present disclosure are shown. Referring to FIG. 6, the device 60 includes: a second display module 601 and a second processing module 602.

The second display module 601 is configured to display target media content on a media content display page, where the target media content is obtained through processing by the media content processing method as provided in the above-mentioned embodiment.

The second display module 601 is further configured to display a first music sticker in the target media content, where the first music sticker is associated with music of the target media content, the first music sticker is added to the target media content by a posting user of the target media content on an editing page of the media content of the current application, and the first music sticker is an interactive sticker.

In an embodiment of the present disclosure, the second display module 601 is specifically configured to: display the first music sticker dynamically based on playback of the music of the target media content.

In an embodiment of the present disclosure, the first music sticker is generated based on song information associated with the music of the target media content, the song information including at least one of the following: a song cover, a songwriter, an artist name, a song name, lyrics, music feature information, or song duration.

In an embodiment of the present disclosure, the first music sticker includes an associated image area, where the associated image area is configured to display a song cover, and/or the associated image area is displayed in a preset dynamic change manner.

In an embodiment of the present disclosure, the first music sticker includes a music feature display area, where the music feature display area is configured to display feature information of the music of the target media content.

In an embodiment of the present disclosure, the feature information of the music includes at least one of the following: melody information of the music, rhythm information of the music, or accent information of the music.

In an embodiment of the present disclosure, the first music sticker includes an associated text display area, where the associated text display area is configured to display text information associated with the music of the target media content.

In an embodiment of the present disclosure, the text information associated with the music of the target media content comprises at least one of the following: lyrics, a songwriter, and an artist name of a song corresponding to the music of the target media content.

In an embodiment of the present disclosure, the associated text display area is configured to display the text information in a scrolling manner.

In an embodiment of the present disclosure, the device 60 further includes the second processing module 602. The second processing module 602 is configured to: favorite music corresponding to the first music sticker in response to a triggering operation on a fifth control of the first music sticker of the target media content in a display interface; or, unfavorite music corresponding to the first music sticker in response to a triggering operation on a sixth control of the first music sticker of the target media content in the display interface.

In an embodiment of the present disclosure, the second processing module 602 is further configured to: perform a playback control operation on the music corresponding to the first music sticker in response to a triggering operation on a sixth control of the first music sticker of the target media content in the display interface.

In an embodiment of the present disclosure, the second processing module 602 is further configured to: switch to a music detail page of the music corresponding to the first music sticker in response to a triggering operation on the first music sticker of the target media content in the display interface.

In an embodiment of the present disclosure, the second processing module 602 is further configured to: enter a shooting page associated with the first music sticker, and display the first music sticker on the shooting page, in response to a shooting operation associated with the first music sticker of the target media content in the display interface being triggered.

The device provided in this embodiment may be configured to perform the technical solution of the above-mentioned media content display method embodiment. The implementation principle and technical effects thereof are similar, and are not described herein again in this embodiment.

In order to implement the above-mentioned embodiments, an embodiment of the present disclosure further provides an electronic device.

Referring to FIG. 7, which is a schematic structural diagram of an electronic device 900 suitable for implementing the embodiments of the present disclosure. The electronic device 900 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in FIG. 7 is merely an example, and shall not impose any limitation on the function and scope of use of the embodiments of the present disclosure.

As shown in FIG. 7, the electronic device 900 may include a processing apparatus (for example, a central processing unit or a graphics processing unit) 901 that may perform a variety of appropriate actions and processing based on a program stored in a read-only memory (ROM) 902 or a program loaded from a storage apparatus 908 into a random access memory (RAM) 903. The RAM 903 further stores various programs and data required for the operation of the electronic device 900. The processing apparatus 901, the ROM 902, and the RAM 903 are connected to one another through a bus 904. An input/output (I/O) interface 905 is also connected to the bus 904.

Generally, the following apparatus may be connected to the I/O interface 905: an input apparatus 906 including, for example, a touchscreen, a touchpad, a keyboard, a mouse, a camera, a microphone, an accelerometer, and a gyroscope; an output apparatus 907 including, for example, a liquid crystal display (LCD), a speaker, and a vibrator; the storage apparatus 908 including, for example, a magnetic tape and a hard disk drive; and a communication apparatus 909. The communication apparatus 909 may allow the electronic device 900 to perform wireless or wired communication with other devices to exchange data. Although FIG. 7 shows the electronic device 900 having various apparatus, it should be understood that it is not required to implement or have all of the shown apparatus. It may be an alternative to implement or have more or fewer apparatus.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 909, installed from the storage apparatus 908, or installed from the ROM 902. When the computer program is executed by the processing apparatus 901, the abovementioned functions defined in the method of the embodiments of the present disclosure are performed.

It should be noted that the abovementioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatus, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A media content processing method, comprising:
displaying media content to be posted on an editing page of media content, wherein the media content to be posted is obtained based on a media content generation page;
displaying an entry control of a background music panel of the media content to be posted on the editing page of the media content;
displaying the background music panel on the editing page in response to a triggering operation on the entry control, wherein the background music panel comprises at least one background music item; and
displaying, in response to a triggering operation on a first target background music item among the at least one background music item, a first music sticker corresponding to the first target background music item on the editing page, wherein the first music sticker is configured to be displayed in target media content that is posted.

2. The method according to claim 1, wherein the triggering operation on the first target background music item among the at least one background music item comprises:
a triggering operation on a target sticker control associated with the first target background music item among the at least one background music item.

3. The method according to claim 1 or 2, wherein displaying the entry control of the background music panel of the media content to be posted on the editing page of the media content comprises:
displaying a first control on the editing page of the media content; and
the displaying the background music panel on the editing page in response to the triggering operation on the entry control comprises:
displaying the background music panel in response to a triggering operation on the first control.

4. The method according to claim 1 or 2, wherein displaying the entry control of the background music panel of the media content to be posted on the editing page of the media content comprises:
displaying a sticker panel of the media content to be posted on the editing page of the media content, wherein the sticker panel comprises a second control;
the displaying the background music panel on the editing page in response to the triggering operation on the entry control comprises:
displaying the background music panel in response to a triggering operation on the second control.

5. The method according to claim 4, wherein displaying the sticker panel of the media content to be posted on the editing page of the media content comprises:
displaying a third control on the editing page of the media content; and
displaying the sticker panel of the media content to be posted on the editing page in response to a triggering operation on the third control.

6. The method according to claim 4 or 5, wherein the method further comprises:
displaying the background music panel, and/or displaying, on the editing page, a second music sticker corresponding to a second target background music item with a preset order in the background music panel in response to no background music being currently selected, in response to the triggering operation on the second control.

7. The method according to any one of claims 4 to 6, wherein the method further comprises:
displaying, in response to a song corresponding to a third target background music item being currently selected as background music, a third music sticker corresponding to the third target background music item on the editing page, in response to the triggering operation on the second control.

8. The method according to any one of claims 1 to 7, wherein displaying the first music sticker corresponding to the first target background music item on the editing page comprises:
determining corresponding song information based on the first target background music item;
generating the first music sticker corresponding to the song information based on the song information; and
displaying the first music sticker on the editing page.

9. The method according to claim 8, wherein the song information comprises at least one of the following: a song cover, a songwriter, an artist name, a song name, lyrics, rhythm information, or song duration.

10. The method according to any one of claims 1 to 9, wherein the first music sticker comprises at least one of the following:
an associated image area, wherein the associated image area is configured to display a song cover, and/or the associated image area is displayed in a preset dynamic change manner;
a music feature display area, wherein the music feature display area is configured to display feature information of music corresponding to the first target background music item; or
an associated text display area, wherein the associated text display area is configured to display text information associated with the first target background music item.

11. The method according to any one of claims 1 to 10, wherein displaying the first music sticker corresponding to the first target background music item on the editing page comprises:
displaying the first music sticker corresponding to the first target background music item at a first position on the editing page, wherein the first position is located outside a display area of a target object.

12. The method according to any one of claims 1 to 11, wherein displaying the first music sticker corresponding to the first target background music item on the editing page comprises:
displaying the first music sticker on top of loaded media content on the editing page.

13. The method according to any one of claims 1 to 12, wherein the media content to be posted comprises an image collection comprising a plurality of images and/or videos, and displaying the first music sticker corresponding to the first target background music item on the editing page comprises:
displaying the first music sticker on a target image in the image collection on the editing page.

14. The method according to any one of claims 1 to 13, wherein after displaying the first music sticker corresponding to the first target background music item on the editing page, the method further comprises:
updating, in response to a triggering operation on a fourth target background music item among the at least one background music item, the first music sticker corresponding to the first target background music item and displayed on the editing page to a fourth music sticker corresponding to the fourth target background music item.

15. The method according to any one of claims 1 to 14, wherein after displaying the first music sticker corresponding to the first target background music item on the editing page, the method further comprises:
switching a display style of the first music sticker in response to a triggering operation on the first music sticker and/or a style switching control.

16. The method according to any one of claims 1 to 15, wherein after displaying the first music sticker corresponding to the first target background music item on the editing page, the method further comprises:
editing a size of the first music sticker in response to a first triggering operation on the first music sticker;
or
deleting the first music sticker in response to a second triggering operation on the first music sticker;
or
adjusting display duration of the first music sticker in response to a third triggering operation on the first music sticker;
or
adjusting a shape of the first music sticker in response to a fourth triggering operation on the first music sticker.

17. The method according to any one of claims 1 to 16, wherein after displaying the first music sticker corresponding to the first target background music item on the editing page, the method further comprises:
generating target media content based on the first music sticker; and
posting the target media content in response to a post operation for the target media content.

18. A media content display method, comprising:
displaying target media content on a media content display page; and
displaying a first music sticker in the target media content, wherein the first music sticker is associated with music of the target media content, the first music sticker is added to the target media content by a posting user of the target media content on an editing page of media content of a current application, and the first music sticker is an interactive sticker.

19. The method according to claim 18, wherein displaying the first music sticker in the target media content comprises:
displaying the first music sticker dynamically based on playback of the music of the target media content.

20. The method according to claim 18 or 19, wherein the first music sticker is generated based on song information associated with the music of the target media content, and the song information comprises at least one of the following: a song cover, a songwriter, an artist name, a song name, lyrics, music feature information, or song duration.

21. The method according to any one of claims 18 to 20, wherein the first music sticker comprises an associated image area, wherein the associated image area is configured to display a song cover, and/or the associated image area is displayed in a preset dynamic change manner.

22. The method according to any one of claims 18 to 21, wherein the first music sticker comprises a music feature display area, wherein the music feature display area is configured to display feature information of the music of the target media content.

23. The method according to claim 22, wherein the feature information of the music comprises at least one of the following: melody information of the music, rhythm information of the music, or accent information of the music.

24. The method according to any one of claims 18 to 23, wherein the first music sticker comprises an associated text display area, wherein the associated text display area is configured to display text information associated with the music of the target media content.

25. The method according to claim 24, wherein the text information associated with the music of the target media content comprises at least one of the following: lyrics, a songwriter, and an artist name of a song corresponding to the music of the target media content.

26. The method according to claim 24 or 25, wherein the associated text display area is configured to display the text information in a scrolling manner.

27. The method according to any one of claims 18 to 26, wherein the method further comprises at least one of the following:
favoriting or unfavoriting the music corresponding to the first music sticker in response to a triggering operation on a fifth control of the first music sticker of the target media content in a display interface; or
performing a playback control operation on the music corresponding to the first music sticker in response to a triggering operation on a sixth control of the first music sticker of the target media content in the display interface.

28. The method according to any one of claims 18 to 27, wherein the method further comprises:
switching to a music detail page of the music corresponding to the first music sticker in response to a triggering operation on the first music sticker of the target media content in the display interface.

29. The method according to any one of claims 18 to 28, wherein the method further comprises:
entering a shooting page associated with the first music sticker and displaying the first music sticker on the shooting page, in response to a shooting operation associated with the first music sticker of the target media content in the display interface being triggered.

30. A media content processing apparatus, comprising:
a first display module, configured to display media content to be posted on an editing page of media content, wherein the media content to be posted is obtained based on a media content generation page;
wherein the first display module is further configured to display an entry control of a background music panel of the media content to be posted on the editing page of the media content; and
a first processing module, configured to display the background music panel on the editing page in response to a triggering operation on the entry control, wherein the background music panel comprises at least one background music item;
wherein the first processing module is further configured to display, in response to a triggering operation on a first target background music item among the at least one background music item, a first music sticker corresponding to the first target background music item on the editing page, wherein the first music sticker is configured to be displayed in target media content that is posted.

31. A media content display apparatus, comprising:
a second display module, configured to display target media content on a media content display page; and
the second display module is further configured to display a first music sticker in the target media content, wherein the first music sticker is associated with music of the target media content, the first music sticker is added to the target media content by a posting user of the target media content on an editing page of media content of a current application, and the first music sticker is an interactive sticker.

32. An electronic device, comprising: a processor and a memory, wherein
the memory stores computer-executable instructions, and
the processor executes the computer-executable instructions stored in the memory, to cause the processor to perform the media content processing method according to any one of claims 1 to 17, and/or the media content display method according to any one of claims 18 to 29.

33. A computer-readable storage medium, wherein the computer-readable storage medium stores computer-executable instructions, in response to the computer-readable storage medium being executed by a processor, the media content processing method according to any one of claims 1 to 17 is implemented, and/or the media content display method according to any one of claims 18 to 29 is implemented.

34. A computer program product, comprising a computer program, wherein the computer program, when executed by a processor, causes the media content processing method according to any one of claims 1 to 17, and/or the media content display method according to any one of claims 18 to 29 to be implemented.
